# EUROPÄISCHE PATENTANMELDUNG

(11) **EP 3 159 614 A1**
(43) Veröffentlichungstag der Anmeldung: **26.04.2017**
(21) Anmeldenummer: 16195096.9
(22) Anmeldetag: 21.10.2016
(51) Int. Cl.: F24D 3/10, F16L 41/03

(54) **ROHRVERTEILER**

(30) Priorität: 22.10.2015 DE 102015117997
(71) Anmelder: Viessmann Werke GmbH & Co. KG, 35108 Allendorf (DE)
(72) Erfinder: Dönges, Roger, 35110 Frankenau (Dainrode) (DE); Gaier, Andrei, 35066 Frankenberg (DE); Görge, Gunthard, 35260 Stadtallendorf (DE); Winter, Erhard, 35066 Frankenberg (DE)
(74) Vertreter: Wolf, Michael

(57) **Zusammenfassung**

Die Erfindung betrifft einen Rohrverteiler, umfassend ein Rohrstück (1), das eine Hauptachse und zwei im Rohrstück (1) nebeneinander, von einem zum anderen Ende des Rohrstücks (1) reichende und entlang der Hauptachse verlaufende Rohrkanalabschnitte (2, 3) zur gegenläufigen Führung eines Fluids aufweist, wobei mindestens einer der beiden Rohrkanalabschnitte (2, 3) mit einem an einer Umfangswandung des Rohrstücks (1) angeordneten Rohranschluss (4) versehen ist, wobei die beidseitig des Rohranschlusses (4) angeordneten Enden der beiden Rohrkanalabschnitte (2, 3) jeweils als vom Fluid durchströmbarer Anschlussflansch ausgebildet sind. Nach der Erfindung ist vorgesehen, dass am Rohranschluss (4) des Rohrstücks (1) eine elektrische Pumpe (11) vorgesehen ist.

## Beschreibung

Die Erfindung betrifft einen Rohrverteiler gemäß dem Oberbegriff des Patentanspruchs 1.

Ein Rohrverteiler der eingangs genannten Art ist aus dem deutschen Gebrauchsmuster DE 298 21 805 U1 bekannt. Dieser Rohrverteiler besteht aus einem Rohrstück, das eine Hauptachse und zwei im Rohrstück nebeneinander, von einem zum anderen Ende des Rohrstücks reichende und entlang der Hauptachse verlaufende Rohrkanalabschnitte zur gegenläufigen Führung eines Fluids (Heizkreismediums) aufweist, wobei mindestens einer der beiden Rohrkanalabschnitte mit einem an einer Umfangswandung des Rohrstücks angeordneten Rohranschluss versehen ist. Weiterhin sind bei dieser Lösung die beidseitig des Rohranschlusses angeordneten Enden der beiden Rohrkanalabschnitte jeweils als vom Fluid durchströmbarer Anschlussflansch ausgebildet.

Außerdem ist aus der DE 20 2005 003 778 U1 ein weiterer Rohrverteiler bekannt. Bei dem in den Figuren dargestellten Ausführungsbeispiel dieser Lösung sind dabei pro Rohrkanalabschnitt insgesamt vier dieser Rohranschlüsse vorgesehen. Ein solcher Rohrverteiler wird bei sogenannten Heizkesselkaskaden verwendet, um das Heizkreismedium (typischerweise Wasser) vom Heizkreis auf die Heizkessel und von diesen zurück auf den Heizkreis zu verteilen. Beim dargestellten Ausführungsbeispiel dienen dabei zwei Rohranschlüsse zur Verbindung des Rohrverteilers mit dem Heizkreis und die übrigen sechs Rohranschlüsse zur Verbindung mit den insgesamt drei (nicht extra dargestellten) Heizkesseln. Sollen mehr oder weniger Heizkessel in einer solchen Kaskade verwendet werden, ist ein entsprechend größerer oder kleinerer Rohrverteiler erforderlich.

Unter einem "Rohrstück" sind dabei im übrigen und auch im Folgenden Strömungskanäle mit beliebigem Querschnitt zu verstehen, also zum Beispiel Kanäle mit rechteckigem, aber insbesondere auch mit rundem oder ovalem Querschnitt.

Der Erfindung liegt die Aufgabe zugrunde, einen Rohrverteiler der eingangs genannten Art zu verbessern. Insbesondere soll ein besonders flexibel einsetzbarer Rohrverteiler geschaffen werden.

Diese Aufgabe ist mit einem Rohrverteiler der eingangs genannten Art durch die im Kennzeichen des Patentanspruchs 1 aufgeführten Merkmale gelöst.

Nach der Erfindung ist also vorgesehen, dass am Rohranschluss des Rohrstücks eine elektrische Pumpe vorgesehen ist.

Der erfindungsgemäße Rohrverteiler zeichnet sich somit unter anderem dadurch aus, dass er an seinen beiden Enden offen und somit zum Anschluss weiterer Rohrverteiler oder dergleichen (wird nachfolgend noch genauer erläutert) ausgebildet ist. Hierdurch ist, wenn man beispielsweise pro Heizkessel von einem Rohrverteiler ausgeht, insbesondere eine hohe Flexibilität bei der Festlegung der Anzahl der zu einer Kaskade gehörenden Heizkessel möglich. Soll die Kaskade zum Beispiel lediglich aus zwei Heizkesseln bestehen, so verwendet man entsprechend lediglich zwei Rohrverteiler. Soll die Kaskade dagegen aus sechs Heizkesseln bestehen, verbindet man sechs Stück der erfindungsgemäßen Rohrverteiler miteinander. Eine Begrenzung ergibt sich dabei letztlich nur durch die Strömungsquerschnitte der beiden Rohrkanalabschnitte, die selbstverständlich groß genug gewählt sein müssen, um die von den Heizkesseln geforderten Volumenströme gewährleisten zu können.

Insgesamt betrachtet, führt dieser Ansatz, wenn man noch für einen entsprechenden Fluidaustausch zwischen den beiden Rohrkanalabschnitten sorgt, was unten noch genauer erläutert wird, somit zu einer hydraulischen Weiche (siehe auch https://de.wikipedia.org/w/index.php?title=Hydraulische_Weiche&oldid= 145347503), die man auch als modulierende Weiche bezeichnen könnte, da sich das bezüglich der Leistung der Anlage jeweils erforderliche Volumen der Weiche aus der Anzahl der verwendeten Rohrverteiler von selbst ergibt.

Eine andere, vorteilhafte Alternative des erfindungsgemäßen Rohrverteilers besteht, was weiter unten ebenfalls noch genauer erläutert wird, ferner darin, einem einzigen Heizkessel mehrere dieser Rohrverteiler zuzuordnen, d. h. zusammengefügt sind beispielsweise sechs dieser Rohrverteiler gerade etwa so breit wie der Heizkessel selbst. Solche vergleichsweise kleinen Rohrverteiler lassen sich, insbesondere wenn sie aus Kunststoff hergestellt werden, besonders preisgünstig fertigen.

Andere vorteilhafte Weiterbildungen des erfindungsgemäßen Rohrverteilers ergeben sich aus den abhängigen Patentansprüchen.

Der erfindungsgemäße Rohrverteiler einschließlich seiner vorteilhaften Weiterbildungen gemäß der abhängigen Patentansprüche wird nachfolgend anhand der zeichnerischen Darstellung verschiedener Ausführungsbeispiele näher erläutert.

Es zeigt
- Figur 1: schematisch und teilweise geschnitten die Grundkonzeption des erfindungsgemäßen Rohrverteilers;
- Figur 2: schematisch ein erstes Anwendungsbeispiel mit insgesamt drei Heizkesseln und drei darunter angeordneten, miteinander verbundenen Rohrverteilern;
- Figur 3: schematisch ein zweites Anwendungsbeispiel mit einem Heizkessel und zwei darüber angeordneten, miteinander über ein Zwischenrohrstück verbundenen Rohrverteilern;
- Figur 4: perspektivisch eine erste, konkrete Ausführungsform des erfindungsgemäßen Rohrverteilers;
- Figur 5: perspektivisch und geschnitten der Rohrverteiler gemäß Figur 4;
- Figur 6: als perspektivischer Längsschnitt der Rohrverteiler gemäß Figur 4 und 5;
- Figur 7: perspektivisch und im Schnitt der Rohrverteiler mit einem speziell ausgebildeten Endstück bzw. Deckelelement;
- Figur 8: perspektivisch eine zweite, konkrete Ausführungsform des erfindungsgemäßen Rohrverteilers mit dem Endstück bzw. Deckelelement gemäß Figur 7 und einem Heizkreisanschlusselement bzw. Adapterelement;
- Figur 9: als perspektivischer Längsschnitt der Rohrverteiler gemäß Figur 8; und
- Figur 10: perspektivisch und geschnitten der Rohrverteiler gemäß Figur 8 und 9.

Der in den Figuren dargestellte Rohrverteiler besteht in an sich bekannter Weise zunächst aus einem Rohrstück 1, das eine Hauptachse und zwei im Rohrstück 1 nebeneinander, von einem zum anderen Ende des Rohrstücks 1 reichende und entlang der Hauptachse verlaufende Rohrkanalabschnitte 2, 3 zur gegenläufigen Führung eines Fluids aufweist, wobei mindestens einer der beiden Rohrkanalabschnitte 2, 3 mit einem an einer Umfangswandung des Rohrstücks 1 angeordneten Rohranschluss 4 versehen ist.

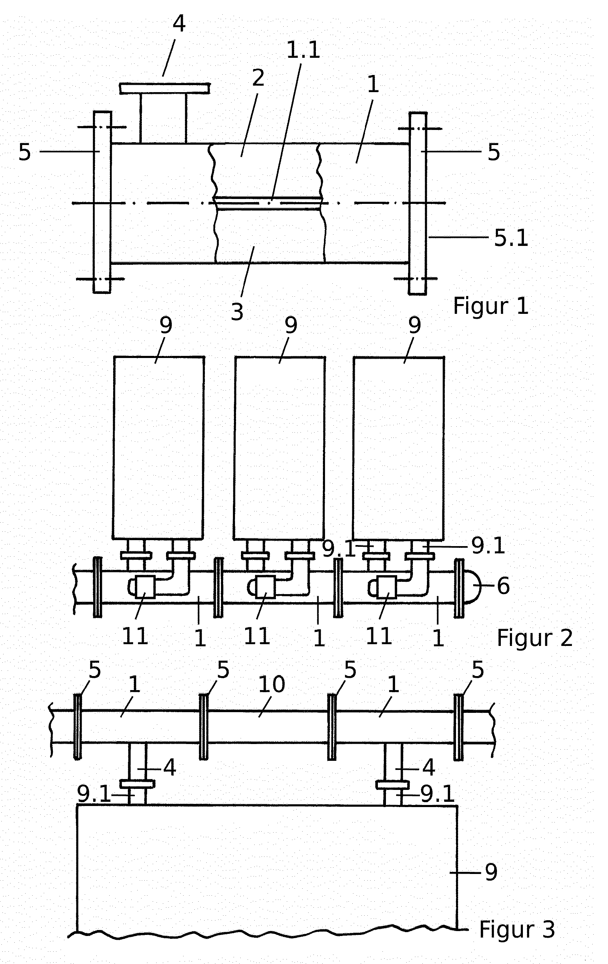

Typisch für alle Ausführungsformen des erfindungsgemäßen Rohrverteilers ist nun, dass die beidseitig des Rohranschlusses 4 angeordneten Enden der beiden Rohrkanalabschnitte 2, 3 jeweils als vom Fluid durchströmbarer Anschlussflansch 5 ausgebildet sind. Figur 1 zeigt schematisch eine Grundform des erfindungsgemäßen Rohrverteilers mit einem Rohranschluss 4. Ebenfalls vorgesehen sind (was unten noch genauer erläutert wird) auch solche Rohrverteiler (vergleiche die Figuren 2, 4 bis 6 und 8 bis 10), bei denen beide Rohrkanalabschnitte 2, 3 mit (jeweils) einem an einer Umfangswandung des Rohrstücks 1 angeordneten Rohranschluss 4 versehen sind.

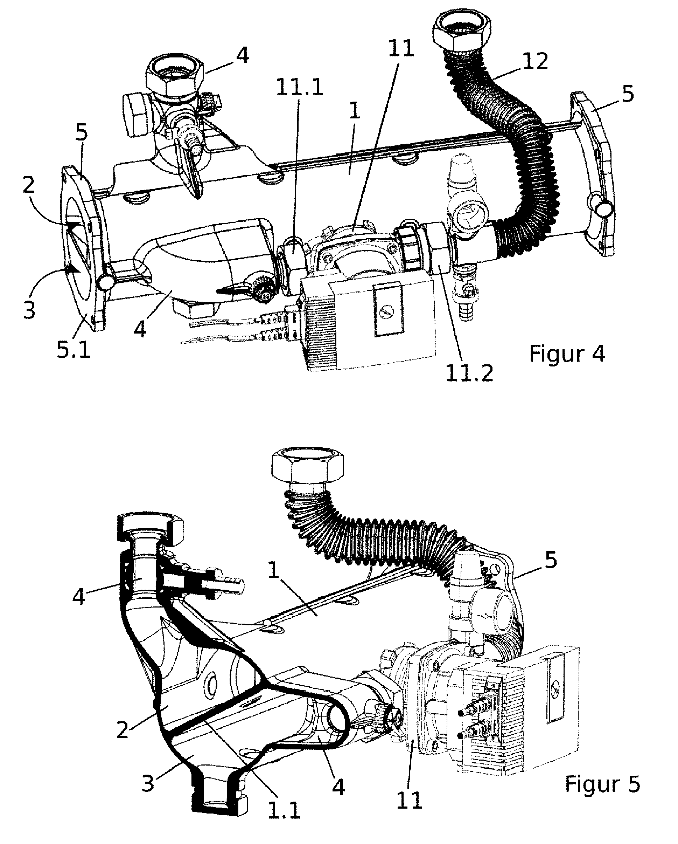

In Figur 1 sind eine lange und vier kurze gestrichelte Linien eingezeichnet. Die lange Linie kennzeichnet die oben genannte Hauptachse des Rohrstücks 1. Die vier übrigen kurzen Linien deuten Bohrungen für Schrauben oder dergleichen zur Befestigung des Rohrverteilers an, die auch in Figur 4 gut zu erkennen sind.

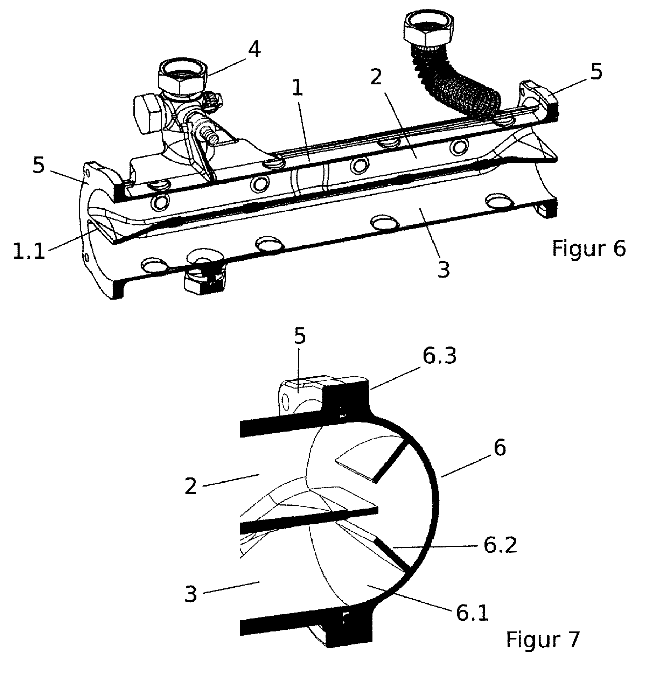

Wieder mit Verweis auf Figur 1 ist zur Ausbildung der beiden Rohrkanalabschnitte 2, 3 besonders bevorzugt vorgesehen, dass zwischen diesen beiden eine Trennwand 1.1 im Rohrstück 1 angeordnet ist. Diese Trennwand 1.1 verläuft parallel zur genannten, langen gestrichelten Linie. Wie zum Beispiel aus Figur 6 gut ersichtlich, ist dabei die Trennwand 1.1 einen Querschnitt des Rohrstücks 1 in zwei (etwa) gleich große Teilquerschnitte aufteilend ausgebildet. Je nach Bedarf kann die Trennwand 1.1 dabei auch ganz oder jedenfalls abschnittsweise helixförmig ausgebildet sein. Figur 6 zeigt zum Beispiel eine Ausführungsform, bei der die Trennwand 1.1 am linken und rechten Ende des Rohrstücks 1 horizontal und dazwischen, jeweils nach einem kurzen helixförmigen Teilstück diagonal verlaufend ausgebildet ist, wobei die Rohranschlüsse 4 jeweils im Bereich des diagonal verlaufenden Teilstücks positioniert sind. Weiterhin ist insgesamt betrachtet besonders bevorzugt vorgesehen, dass das Rohrstück 1 und die Trennwand 1.1 einstückig ausgebildet sind, und/oder, dass das Rohrstück 1 im Gussverfahren hergestellt ausgebildet ist.

Wie sich unmittelbar aus den Figuren 2 und 3 und auch aus der Beschreibungseinleitung ergibt, ist der erfindungsgemäße Rohrverteiler insbesondere für Heizungsanlagen vorgesehen.

Figur 2 zeigt dabei eine Heizungsanlage mit insgesamt drei Heizkesseln 9, also eine Kaskade, bei der je nach Wärmebedarf ein oder mehrere Heizkessel 9 betrieben werden. Bezüglich des erfindungsgemäßen Rohrverteilers ist bei einer solchen Anlage dabei besonders bevorzugt vorgesehen, dass mehrere Rohrstücke 1 über ihren Anschlussflansch 5 direkt miteinander verbunden und horizontal unter einer Reihe von nebeneinander positionierten Heizkesseln 9 angeordnet sind, wobei pro Heizkessel 9 ein Rohrstück 1 vorgesehen ist. Die Maßgabe "direkt" bringt dabei zum Ausdruck, dass bei der Lösung gemäß Figur 2 keine weiteren Zwischenstücke zwischen den Rohrstücken 1 angeordnet sind. Auf weitere Details zur Ausbildung der Rohrstücke 1 wird weiter unten noch genauer eingegangen.

Figur 3 zeigt eine Lösung, bei der der Rohrverteiler als Teil einer Heizungsanlage mit mindestens einem Heizkessel 9 ausgebildet ist. Eine Besonderheit dieser Lösung besteht dabei darin, dass einem Vor- und Rücklaufanschlüsse 9.1 aufweisenden Heizkessel 9 pro Anschluss ein Rohrstück 1 zugeordnet ist und die Rohrstücke 1 über ihre Anschlussflansche 5 hydraulisch miteinander (direkt oder indirekt) verbunden ausgebildet sind. In diesem Fall sind also vergleichsweise kurze und damit - insbesondere wenn man sie zum Beispiel im Kunststoffspritzguss herstellt - kostengünstig herstellbare Rohrverteiler vorgesehen, wobei weiterhin, wie ersichtlich, besonders bevorzugt vorgesehen sein kann (aber nicht muss), dass zwischen zwei Rohrstücken 1 ein rohranschlussfreies, aber ebenfalls zwei Rohrkanalabschnitte 2, 3 und beidseitig Anschlussflansche 5 aufweisendes Zwischenrohrstück 10 angeordnet ist. Der verwendete Begriff "rohranschlussfrei" bedeutet dabei, dass - im Unterschied zum Rohrstück 1 - an der Umfangswandung des Zwischenrohrstücks 10 kein Rohranschluss 4 vorgesehen ist. Wie ersichtlich, sind somit bei dieser Lösung pro Heizkessel 9 typischerweise zwei erfindungsgemäße Rohrstücke 1 und ein oder mehrere Zwischenrohrstücke 10 vorgesehen.

Eine weitere Besonderheit bei der in Figur 3 dargestellten Ausführungsform, bei der Rohranschluss 4 des Rohrstücks 1 hydraulisch mit einem Vor- oder Rücklaufanschluss 9.1 eines Heizkessels 9 der Heizungsanlage verbunden ausgebildet ist, besteht dabei darin, dass das Rohrstück 1 bzw. der Rohrverteiler oberhalb eines mit an seinem oberen Ende angeordneten Vorund Rücklaufanschlüssen 9.1 versehenen Heizkessels 9 angeordnet ist. Diese Lösung kommt dabei, wie ersichtlich, auch für Mehrkesselanlagen in Betracht und hat zum Beispiel in vergleichsweise flachen Kellerräumen den Vorteil, dass die Anlage leichter installiert werden kann.

Zur Realisierung beispielsweise der Lösung gemäß Figur 2 ist weiterhin besonders bevorzugt vorgesehen (vergleiche auch Figur 7 bis 10), dass ein Anschlussflansch 5 des Rohrstücks 1 mit einem Deckelelement 6 verschlossen ausgebildet ist. Dieses Deckelelement 6 ist dabei besonders bevorzugt im Gussverfahren hergestellt ausgebildet und weist einerseits einen zum Anschlussflansch 5 des Rohrstücks 1 passenden Deckelanschlussflansch 6.3 und andererseits eine halbkugelförmige Wandung auf.

Um das Rohrstück 1 wahlweise allein oder auch in Kombination mit weiteren Rohrstücken 1 als sogenannte hydraulische Weiche verwenden zu können, ist weiterhin vorgesehen, dass das Deckelelement 6 einen die beiden Rohrkanalabschnitte 2, 3 miteinander verbindenden Strömungskanal 6.1 für das Fluid bzw. das Heizkreismedium aufweist. Wäre in Figur 7 der obere Rohrkanalabschnitt 2 jeweils mit den Vorlaufanschlüssen und der untere Rohrkanalabschnitt 3 jeweils mit den Rücklaufanschlüssen der Heizkessel 9 verbunden, so könnte das Fluid, wenn zum Beispiel der Volumenstrom bei den Heizkörpern (Verbraucher) des Heizkreises größer ist als der Volumenstrom durch die Heizkessel 9 (Erzeuger), vom unteren Rohrkanalabschnitt 3 zum oberen Rohrkanalabschnitt 2 strömen und auf diese Weise für einen Volumenstromausgleich sorgen. Wäre dagegen der gesamte Volumenstrom des Fluids durch die Heizkessel 9 größer als durch die Heizkörper, würde das Fluid entsprechend umgekehrt vom oberen Rohrkanalabschnitt 2 in den unteren Rohrkanalabschnitt 3 strömen.

Da eine solche Ausgleichsströmung allerdings mit Wärmeverlusten verbunden und insofern an sich aus energetischer Sicht unerwünscht ist, ist dabei weiterhin vorgesehen, dass der Strömungskanal 6.1 zum Behindern bzw. Abbremsen der Fluidströmung von einem zum anderen Rohrkanalabschnitt 2, 3 einen im Vergleich zum Querschnitt der Rohrkanalabschnitte 2, 3 kleineren freien Durchströmquerschnitt aufweist. Außerdem sind, wie Figur 7 zeigt, im Strömungskanal 6.1 zur Behinderung bzw. zum Aufhalten der Fluidströmung Rippen 6.2 angeordnet.

Alternativ oder auch darüber hinaus kann (nicht extra dargestellt) ebenfalls zur Realisierung der oben genannten Weichenfunktion an der Trennwand 1.1 eine die beiden Rohrkanalabschnitt 2, 3 miteinander verbindende, vorzugsweise kleine Durchgangsöffnung vorgesehen sein, und zwar entweder irgendwo auf der Strecke zwischen den beiden Anschlussflanschen 5 oder auch unmittelbar im Bereich des Anschlussflansches 5. Auf diese Weise kann das Fluid dann zum Beispiel nicht nur von einem Rohrkanalabschnitt 2 eines Rohrstücks 1 zum entsprechenden Rohrkanalabschnitt 2 eines weiteren Rohrstücks 1 fließen, sondern auch von dem Rohrkanalabschnitt 2 des einen Rohrstücks 1 zum Rohrkanalabschnitt 3 des gleichen oder auch des benachbarten Rohrstücks 1.

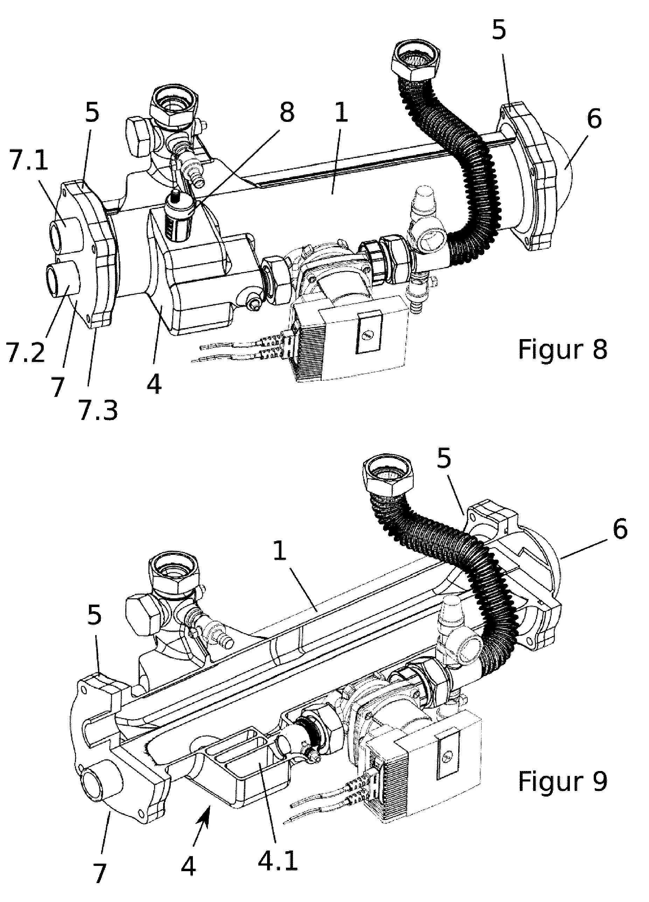

Zur Verbindung des Rohrstücks 1 mit einem Heizkreis einer Heizungsanlage ist mit Verweis auf die Figuren 8 und 9 ein Anschlussflansch 5 des Rohrstücks 1 mit einem Adapterelement 7 verschlossen ausgebildet ist, wobei an diesem Adapterelement 7 ein erster, mit dem einen und ein zweiter, mit dem anderen Rohrkanalabschnitt 2, 3 hydraulisch verbundener Anschlussstutzen 7.1, 7.2 (Vor- und Rücklaufstutzen) vorgesehen ist.

Das Ausführungsbeispiel in Figur 8 und 9 zeigt dabei eine Lösung für einen einzigen Heizkessel 9, was sich daraus ergibt, dass der rechte Anschlussflansch 5 mit dem oben beschriebenen Deckelelement 6 und der linke Anschlussflansch 5 mit dem Adapterelement 7 verschlossen ausgebildet ist. Es versteht sich dabei von selbst, dass zwischen dem Deckelelement 6 und dem Adapterelement 7 im Sinne von Figur 2 und 3 auch mehrere erfindungsgemäße Rohrstücke 1 angeordnet sein können.

Wie auch beim Deckelelement 6 ist weiterhin bevorzugt vorgesehen, dass das Adapterelement 7 einen zum Anschlussflansch 5 des Rohrstücks 1 passenden Adapteranschlussflansch 7.3 aufweist, wobei grundsätzlich darüber hinaus vorgesehen ist, dass der Anschlussflansch 5 des Rohrstücks 1 eine ebene Anlagefläche 5.1 aufweist, so dass beispielsweise unter Zwischenlage eines Dichtungsringes (nicht extra dargestellt) oder dergleichen eine fluiddichte Verbindung zwischen dem Rohrstück 1 und dem Deckelelement 6 bzw. dem Adapterelement 7 oder auch zwischen zwei Rohrstücken 1 selbst geschaffen werden kann.

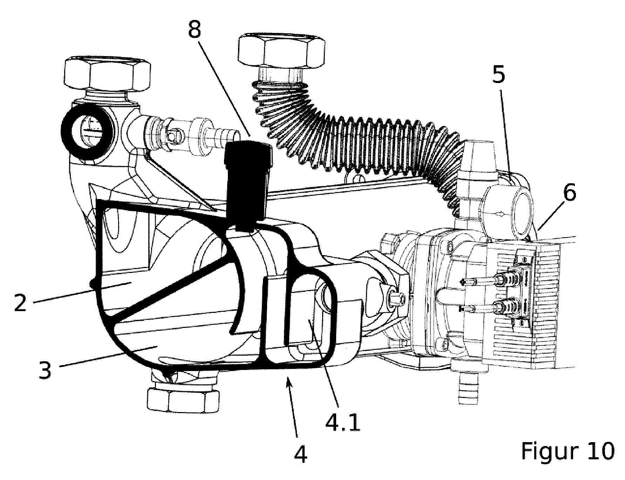

Mit Verweis auf die Ausführungsform gemäß Figur 9 und 10 ist ferner bevorzugt vorgesehen, dass der an der Umfangswandung des Rohrstücks 1 angeordnete Rohranschluss 4 einen labyrinthisch verlaufenden, eine höchste Stelle aufweisenden Strömungskanal 4.1 umfasst, wobei weiterhin an der höchsten Stelle des labyrinthischen Strömungskanals 4.1 ein Entlüftungsventil 8 angeordnet ist. Wie ersichtlich, ist es auf diese Weise besonders einfach möglich, im Heizkreis befindliche, grundsätzlich unerwünschte Luft abzusondern, wobei außerdem besonders bevorzugt vorgesehen ist, dass der labyrinthisch verlaufende Strömungskanal 4.1 im Gussverfahren hergestellt ausgebildet ist.

Im Bestreben einen besonders flexibel einsetzbaren Rohrverteiler zu schaffen, ist weiterhin mit Verweis auf die Ausführungsformen in den Figuren 2, 4, 5 und 8 bis 10 vorgesehen, dass zwischen dem Rohranschluss 4 und einem mit dem Rohranschluss 4 hydraulisch verbundenen Vor- oder Rücklaufanschluss 9.1 eines Heizkessels 9 eine elektrische Pumpe 11 zur Förderung des Fluids angeordnet ist.

Noch etwas genauer betrachtet (vergleiche hierzu Figur 4), ist besonders bevorzugt vorgesehen, dass zwei Rohranschlüsse 4 an einem Ende des Rohrstücks 1 angeordnet sind, dass die Pumpe 11 mit einem ihrer Anschlüsse 11.1 an einem der beiden Rohranschlüsse 4 angeordnet ist und dass ein mit dem anderen Anschluss 11.2 der Pumpe 11 verbundenes Rohradapterstück 12 bis zum anderen Ende des Rohrstücks 1 reichend ausgebildet ist, wobei der freie Rohranschluss 4 und das freie Ende des Rohradapterstücks 12 mit einem Vor- bzw. Rücklaufanschluss 9.1 eines Heizkessels 9 verbindbar bzw. verbunden (nicht extra dargestellt) sind.

Wie aus den Figuren ersichtlich, ist ferner und ganz allgemein, um einen möglichst kompakten Rohrverteiler zu schaffen, eine gedachte Verbindungslinie zwischen zwei Anschlüssen 11.1, 11.2 der Pumpe 11 parallel zur Hauptachse des Rohrstücks 1 verlaufend ausgebildet. Weiterhin ist der senkrecht in den bzw. aus dem Rohrkanalabschnitt 2, 3 ein- bzw. ausmündende Rohranschluss 4 als 90°-Umlenkung für das Fluid ausgebildet.

In den Figuren 2 und 4 ist dabei schließlich die erfindungsgemäße Maßgabe dargestellt, dass insbesondere bei einer mehrere Rohrstücke 1 aufweisenden Heizungsanlage pro Rohrstück 1 eine elektrische Pumpe 11 vorgesehen ist, d. h. jeder einzelne Heizkessel 9 weist seine eigene (Kesselkreis-) Pumpe auf, so dass das Fluid bzw. das Heizkreismedium gezielt und nach Bedarf pro Heizkessel 9 aus dem erfindungsgemäßen Rohrverteiler entnommen und diesem nach Passage des Heizkessels 9 wieder zugeführt werden kann. Besteht die Heizungsanlage insgesamt aus nur einem Heizkessel 9, so ist am Rohranschluss 4 bzw. an einem Rohranschluss 4 des Rohrstücks 1 eine Pumpe 11 vorgesehen. Insbesondere in diesem Fall ist dann ein Anschlussflansch 5 des Rohrstücks 1 mit dem oben beschriebenen Deckelelement 6 verschlossen ausgebildet.

### Bezugszeichenliste

- 1: Rohrstück
- 1.1: Trennwand
- 2: Rohrkanalabschnitt
- 3: Rohrkanalabschnitt
- 4: Rohranschluss
- 4.1: Strömungskanal
- 5: Anschlussflansch
- 5.1: Anlagefläche
- 6: Deckelelement
- 6.1: Strömungskanal
- 6.2: Rippe
- 6.3: Deckelanschlussflansch
- 7: Adapterelement
- 7.1: Anschlussstutzen
- 7.2: Anschlussstutzen
- 7.3: Adapteranschlussflansch
- 8: Entlüftungsventil
- 9: Heizkessel
- 9.1: Vor- und/oder Rücklaufanschluss
- 10: Zwischenrohrstück
- 11: Pumpe
- 11.1: ein Anschluss der Pumpe
- 11.2: ein anderer Anschluss der Pumpe
- 12: Rohradapterstück

## Patentansprüche

1. Rohrverteiler, umfassend ein Rohrstück (1), das eine Hauptachse und zwei im Rohrstück (1) nebeneinander, von einem zum anderen Ende des Rohrstücks (1) reichende und entlang der Hauptachse verlaufende Rohrkanalabschnitte (2, 3) zur gegenläufigen Führung eines Fluids aufweist, wobei mindestens einer der beiden Rohrkanalabschnitte (2, 3) mit einem an einer Umfangswandung des Rohrstücks (1) angeordneten Rohranschluss (4) versehen ist, wobei die beidseitig des Rohranschlusses (4) angeordneten Enden der beiden Rohrkanalabschnitte (2, 3) jeweils als vom Fluid durchströmbarer Anschlussflansch (5) ausgebildet sind,
**dadurch gekennzeichnet,**
**dass** am Rohranschluss (4) des Rohrstücks (1) eine elektrische Pumpe (11) vorgesehen ist.

2. Rohrverteiler nach Anspruch 1, wobei der Rohrverteiler als Teil einer Heizungsanlage ausgebildet ist,
**dadurch gekennzeichnet,**
**dass** bei einer mehrere Rohrstücke (1) aufweisenden Heizungsanlage pro Rohrstück (1) eine elektrische Pumpe (11) vorgesehen ist.

3. Rohrverteiler nach Anspruch 1 oder 2,
**dadurch gekennzeichnet,**
**dass** ein Anschlussflansch (5) des Rohrstücks (1) mit einem Deckelelement (6) verschlossen ausgebildet ist.

4. Rohrverteiler nach Anspruch 3,
**dadurch gekennzeichnet,**
**dass** das Deckelelement (6) einen die beiden Rohrkanalabschnitte (2, 3) miteinander verbindenden Strömungskanal (6.1) für das Fluid aufweist.

5. Rohrverteiler nach einem der Ansprüche 1 bis 4,
**dadurch gekennzeichnet,**
**dass** ein Anschlussflansch (5) des Rohrstücks (1) mit einem Adapterelement (7) verschlossen ausgebildet ist.

6. Rohrverteiler nach Anspruch 5,
**dadurch gekennzeichnet,**
**dass** am Adapterelement (7) ein erster, mit dem einen und ein zweiter, mit dem anderen Rohrkanalabschnitt (2, 3) hydraulisch verbundener Anschlussstutzen (7.1, 7.2) vorgesehen ist.

7. Rohrverteiler nach einem der Ansprüche 1 bis 6,
**dadurch gekennzeichnet,**
**dass** der an der Umfangswandung des Rohrstücks (1) angeordnete Rohranschluss (4) einen labyrinthisch verlaufenden, eine höchste Stelle aufweisenden Strömungskanal (4.1) umfasst.

8. Rohrverteiler nach Anspruch 7,
**dadurch gekennzeichnet,**
**dass** an der höchsten Stelle des labyrinthischen Strömungskanals (4.1) ein Entlüftungsventil (8) angeordnet ist.

9. Rohrverteiler nach einem der Ansprüche 1 bis 8, wobei der Rohrverteiler als Teil einer Heizungsanlage und der Rohranschluss (4) des Rohrstücks (1) hydraulisch mit einem Vor- oder Rücklaufanschluss (9.1) eines Heizkessels (9) der Heizungsanlage verbunden ausgebildet ist,
**dadurch gekennzeichnet,**
**dass** das Rohrstück (1) oberhalb eines mit an seinem oberen Ende angeordneten Vor- und Rücklaufanschlüssen (9.1) versehenen Heizkessels (9) angeordnet ist.

10. Rohrverteiler nach einem der Ansprüche 1 bis 8, wobei der Rohrverteiler als Teil einer aus mehreren Heizkesseln (9) bestehenden Heizungsanlage ausgebildet ist,
**dadurch gekennzeichnet,**
**dass** mehrere Rohrstücke (1) über ihren Anschlussflansch (5) direkt miteinander verbunden und horizontal über oder unter einer Reihe von nebeneinander positionierten Heizkesseln (9) angeordnet sind, wobei pro Heizkessel (9) ein Rohrstück (1) vorgesehen ist.

11. Rohrverteiler nach einem der Ansprüche 1 bis 8, wobei der Rohrverteiler als Teil einer Heizungsanlage mit mindestens einem Heizkessel (9) ausgebildet ist,
**dadurch gekennzeichnet,**
**dass** einem Vor- und Rücklaufanschlüsse (9.1) aufweisenden Heizkessel (9) pro Anschluss ein Rohrstück (1) zugeordnet ist und die Rohrstücke (1) über ihre Anschlussflansche (5) hydraulisch miteinander verbunden ausgebildet sind.
